# EUROPEAN PATENT APPLICATION

(11) **EP 2 365 418 A2**
(43) Date of publication of application: **14.09.2011**
(21) Application number: 11157646.8
(22) Date of filing: 10.03.2011
(51) Int. Cl.: G06F 1/32

(54) **Communication apparatus, communication method, program, and computer-readable storage medium**

(30) Priority: 11.03.2010 JP 2010055122
(71) Applicant: CANON KABUSHIKI KAISHA, Ohta-ku Tokyo 146-8501 (JP)
(72) Inventor: Watanabe, Kazunari, Ohta-ku Tokyo (JP)
(74) Representative: Garner, Jonathan Charles Stapleton

(57) **Abstract**

This invention provides a communication technique which allows data communication upon setting a proper operation mode for power consumption level control in accordance with a variation in communication rate or a change in the operation state of the communication apparatus due to various factors. This communication apparatus includes a sub-system (102) including a communication unit to transmit and receive data and a main system which performs reception processing of data received by the sub-system and generation processing of data to be transmitted from the sub-system. The main system (101) includes a main system state detection unit to detect the operation state of the main system. The sub-system (102) includes a control unit to control the transmission/reception of data by setting, for the communication unit, an operation mode for controlling the power consumption level of the sub-system which is selected in accordance with the detection result obtained by the main system state detection unit.

## Description

### BACKGROUND OF THE INVENTION

### Field of the Invention

The present invention relates to a communication apparatus, communication method, program and storage medium.

### Description of the Related Art

Conventionally, there have been proposed various methods of achieving low power consumption in multiprocessor-implemented systems each constituted by a main processor and a sub-processor. Such a system includes an external memory commonly accessible from the respective processors and local memories occupied by the respective processors. For low power consumption, it is regarded effective to stop access to the external memory or stop the supply of clocks to the main control units including the respective processors. However, stopping access to the external memory in a low power consumption mode will require to perform processing in the low power consumption mode by using only a local memory. This makes it necessary to increase the size of the local memory.

In order to solve this problem, the prior art has proposed to use a low power consumption mode detection unit to detect the low power consumption mode independently of the main system and the sub-system. The prior art has also proposed a procedure for making the respective processors share the local memories possessed by the respective processors in the low power consumption mode.

This technique satisfies both the requirements, that is, a reduction in the size of the local memory of each processor and low power consumption. The TCP/IP protocol is used as a communication protocol to execute communication processing. Various communication standards to be used for the execution of communication processing are those defined in IEEE (Institute of Electrical and Electronic Engineers).

The above conventional technique, however, is the method of alternatively switching between the two modes, that is, the low power consumption mode and the normal mode, and hence requires, if it is necessary to implement a plurality of low power consumption modes, a new procedure or mechanism for selecting a proper mode. More specifically, in communication processing using the sub-processor, it is necessary to perform communication processing upon selecting a proper communication rate among low and high rates depending on the communication party, the application under execution, the quality of the communication path used, or the like.

In the execution of communication processing at a low communication rate for data communication, the sub-processor may be allowed to perform low-throughput operation. In such a case, to make the sub-processor execute communication processing in the normal mode contradicts the requirement for proper operation for low power consumption.

In addition, since the above conventional technique is the memory control method for operation after switching to the low power consumption mode, in order to obtain the effect of low power consumption more effectively, it is necessary to determine under which conditions and at which timing a low power consumption mode is to be selected. That is, it is necessary to select a proper mode and switch modes at a proper timing by performing accurate measurement to determine by which application and communication means the home apparatus performs data communication with a remote apparatus. More specifically, even data communications with remote apparatuses using the same application include operation which requires communication with strong real time performance such as video stream transfer and operation which requires communication with low real time performance such as file transfer. In the former operation, the apparatus determines priority as follows: communication processing is more important than low power consumption. In the latter operation, the apparatus determines priority as follows: communication processing is less important than low power consumption. Although both the operations use the same application for data communication, the apparatus needs to perform mode selection control to select the normal mode for the former operation and the low power consumption mode for the latter operation.

### SUMMARY OF THE INVENTION

The present invention provides a communication technique which allows data communication upon selecting a proper power mode in accordance with a change in the operation state of a communication apparatus.

The present invention in its first aspect provides a communication apparatus as specified in claims 1 to 6.

The present invention in its second aspect provides a communication method as specified in claim 7.

The present invention in its third aspect provides a program as specified in claim 8.

The present invention in its fourth aspect provides a storage medium as specified in claim 9.

According to the present invention, it is possible to perform data communication upon selecting a proper power mode in accordance with a change in the operation state of a communication apparatus.

Further features of the present invention will become apparent from the following description of exemplary embodiments (with reference to the attached drawings).

### BRIEF DESCRIPTION OF THE DRAWINGS

Fig. 1A is a block diagram showing the arrangement of a communication apparatus according to the first to fifth embodiments;

Fig. 1B is a view for explaining how an operation mode is selected for a sub-system by using the operation rate of a main system and an application type as parameters;

Fig. 2 is a flowchart for explaining a processing procedure for setting an operation mode for the sub-system in the communication apparatus according to the first embodiment;

Fig. 3A is a lookup table for selecting an operation mode for the sub-system in a communication apparatus according to the second embodiment;

Fig. 3B is a flowchart for explaining a processing procedure for setting an operation mode for the sub-system in the communication apparatus according to the second embodiment;

Fig. 4 is a flowchart for explaining a processing procedure for setting an operation mode for the sub-system when the communication apparatus according to the second embodiment executes data reception processing;

Fig. 5A is a view showing the correspondence relationship between socket information and the throughput required by each application executed by the communication apparatus;

Fig. 5B is a lookup table for selecting an operation mode for the sub-system;

Fig. 6 is a flowchart for explaining a processing procedure for setting an operation mode for the sub-system in a communication apparatus according to the third embodiment;

Fig. 7A is a lookup table for selecting an operation mode for the sub-system;

Fig. 7B is a flowchart for explaining a processing procedure for setting an operation mode for the sub-system in a communication apparatus according to the fourth embodiment;

Fig. 8A is a graph showing changes in effective throughput over time when the communication apparatus is in a communication state;

Fig. 8B is a flowchart for explaining a processing procedure for setting an operation mode for the sub-system in a communication apparatus according to the fifth embodiment; and

Fig. 9 is a flowchart for explaining a procedure for the processing in step S806 in Fig. 8B.

### DESCRIPTION OF THE EMBODIMENTS

### (First Embodiment)

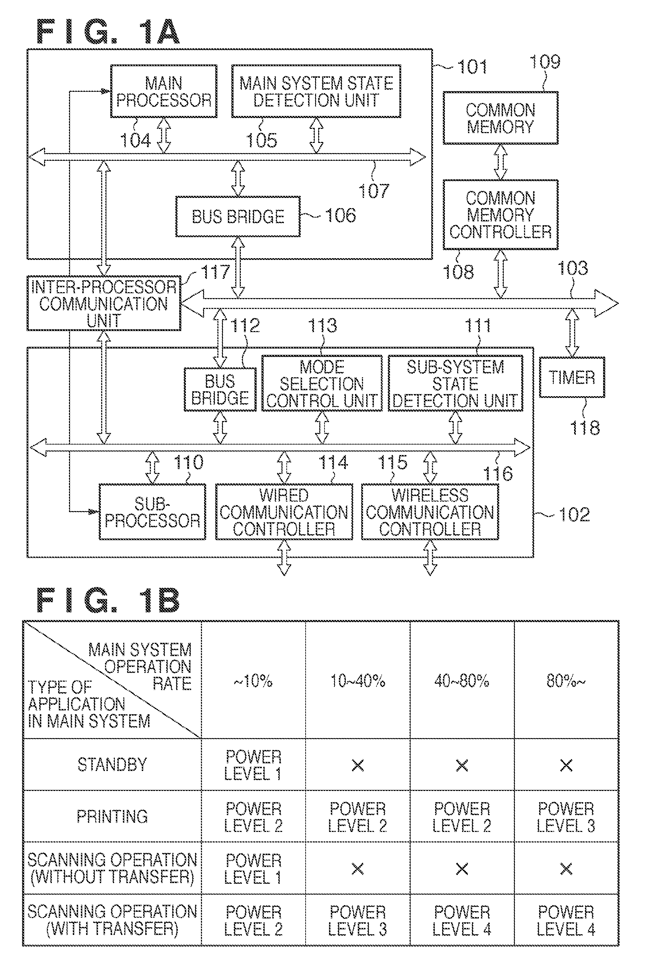

The arrangement of a communication apparatus will be described with reference to Fig. 1A. In the communication apparatus, a main system 101 and a sub-system 102 are connected to a main bus 103, and a common memory 109 is connected to the main bus 103 via a common memory controller 108. The common memory controller 108 performs control for access to the common memory 109 via the main bus 103. This allows access, such as read and write access from the main system 101 and the sub-system 102 to the common memory 109. A timer 118 is connected to the main bus 103 to allow accesses from the main system 101 and the sub-system 102. The timer 118 measures time intervals from time information such as dates and times or under the control of the main system 101 and sub-system 102.

A main processor 104 controls the main system 101. The main system 101 incorporates a local bus 107. The main processor 104 is connected to the local bus 107. The main processor 104 can access the main bus 103, the common memory controller 108, the common memory 109, and the timer 118 via the local bus 107 and a bus bridge 106.

A main system state detection unit 105 has a function of detecting the operation state of the main system 101 such as the type of application executed in the main system 101 and the operation rate of the main processor 104. Detailed cases will be described later. The information detected by the main system state detection unit 105 is written in a predetermined storage area in the common memory 109 via the bus bridge 106, the main bus 103, and the common memory controller 108.

A sub-processor 110 controls the sub-system 102. The sub-system 102 incorporates a local bus 116. The sub-processor 110 is connected to the local bus 116. The sub-processor 110 can access the main bus 103, the common memory controller 108, the common memory 109, and the timer 118 via the local bus 116 and a bus bridge 112.

Since the sub-system 102 is a sub-system for executing communication processing, the sub-processor 110 has a function for processing various kinds of communication protocols, and acquires necessary time information from the timer 118. A sub-system state detection unit 111 has a function of detecting the state of communication processing (a connection state, disconnection state, and the like) executed in the sub-system 102. Other functions will be described later.

The information detected by the sub-system state detection unit 111 is written in a predetermined storage area in the common memory 109 via the bus bridge 112, the main bus 103, and the common memory controller 108. In addition, the sub-processor 110 can read the detection result obtained by the sub-system state detection unit 111 via the local bus 116.

The sub-system 102 also has a function of selecting an operation mode. A mode selection control unit 113 of the sub-system 102 switches operation modes. As will be described later, the mode selection control unit 113 has a function of selecting an operation mode in accordance with the state of the main system 101.
In addition, the mode selection control unit 113 includes a clock signal generating circuit, and has a function of selecting and outputting one of a plurality of frequencies in accordance with operation mode switching operation. Along with operation mode switching, a clock frequency output as a system clock from the sub-system 102 changes. The sub-system 102 includes a wired communication controller 114 and a wireless communication controller 115 as interfaces for data communication. The wired communication controller 114 is configured to incorporate a MAC layer portion and a PHY layer portion and be connected to Ethernet.

The wireless communication controller 115 includes Host_IF (USB, SDIO, PCI, or the like) connected to a wireless LAN module conforming to standards associated with IEEE802.11. The sub-processor 110 has a function of controlling a control LSI mounted in the wireless communication controller 115 in accordance with an instruction.

An inter-processor communication unit 117 provides a communication path which connects the main system 101 and the sub-system 102 via the main bus 103. The inter-processor communication unit 117 has a register arrangement inside, and conforms to specifications designed to assert an interrupt signal to the sub-system (or the main system) when a predetermined bit is written in the register. For example, the main processor 104 accesses the inter-processor communication unit 117 via the local bus 107 to set the predetermined bit inside the unit 117 to "1". At this time, information (a command) or the like to be notified to the sub-processor 110 is also simultaneously written in the internal register. When "1" is written in the predetermined bit inside the inter-processor communication unit 117, the inter-processor communication unit 117 asserts an interrupt signal to the sub-processor 110 and notifies an access request from the main processor 104.

Upon receiving the interrupt signal, the sub-processor 110 checks first the notified information by accessing the internal register in the inter-processor communication unit 117, and then returns its state to the initial state by writing "0" in the predetermined bit. Executing such a procedure will implement inter-processor communication from the main processor 104 to the sub-processor 110. In addition, executing a procedure reverse to the above procedure can implement inter-processor communication from the sub-processor 110 to the main processor 104.

A way of selecting an operation mode for the sub-system 102 by using the operation rate of the main system 101 and an application type as parameters will be described below with reference to Fig. 1B. An operation mode for the sub-system is determined by using the type of application executed in the main system 101 as a column parameter of the lookup table, and the operation rate of the main system as a row parameter of the lookup table. Referring to Fig. 1B, power levels 1 to 4 indicate operation modes for the sub-system 102 from the operation mode with the lowest power consumption level to the operation mode with the highest consumption level in ascending order of power consumption levels. When switching the operation mode from an operation mode with a low power consumption level to an operation mode with a high power consumption level, the apparatus switches the clock generated by the mode selection control unit 113. That is, the apparatus implements such switching operation by switching from a frequency corresponding to an operation mode with a low power consumption level to a frequency corresponding to an operation mode with a high power consumption level.

Fig. 1B exemplifies a case in which a communication apparatus is incorporated in a printer apparatus having a scanner function and a data communication function, and an application type and the operation rate of the main system 101 are used as parameters. As an application type in Fig. 1B, the information of the type of application currently executed by the main processor 104 in a predetermined cycle is written at a predetermined address in the common memory 109. Alternatively, it is possible to write application type information at a predetermined address in the common memory 109 at the timing of changing the application executed by the main processor 104.

This apparatus writes the operation rate of the main system at a predetermined address in the common memory 109 based on the result obtained from causing the main system state detection unit 105 to monitor the operation state of the main processor 104. Alternatively, the main system state detection unit 105 monitors the operation state of the main processor 104, and it is possible to temporarily store the monitoring result in the main system state detection unit 105. Thereafter, the main processor 104 can write the information temporarily stored in the main system state detection unit 105 at a predetermined address in the common memory 109 in a predetermined cycle.

The main system state detection unit 105 detects the operation rate of the main processor 104. The main system state detection unit 105 monitors the frequency of access from the main processor 104 to the local bus 107, and measures an access frequency for a predetermined period of time. The main system state detection unit 105 has a function of calculating the operation rate of the main processor 104 based on the measurement result and converting the calculated operation rate into a numerical value.

The sub-processor 110 checks the state of the main system 101, which is written at a predetermined address, by accessing the common memory 109 in a predetermined cycle. The mode selection control unit 113 internally stores a lookup table like that shown in Fig. 1B. The mode selection control unit 113 selects and determines the state of the main system 101 read from the common memory 109 and the operation mode of the sub-system 102 from the lookup table as the result of a check on the state of the main system 101. If, for example, the result of a check on the state of the main system 101 is "scan operation (without transfer)" and "main system operation rate: less than 10%", the apparatus selects power level 1 corresponding to the lowest power consumption level.

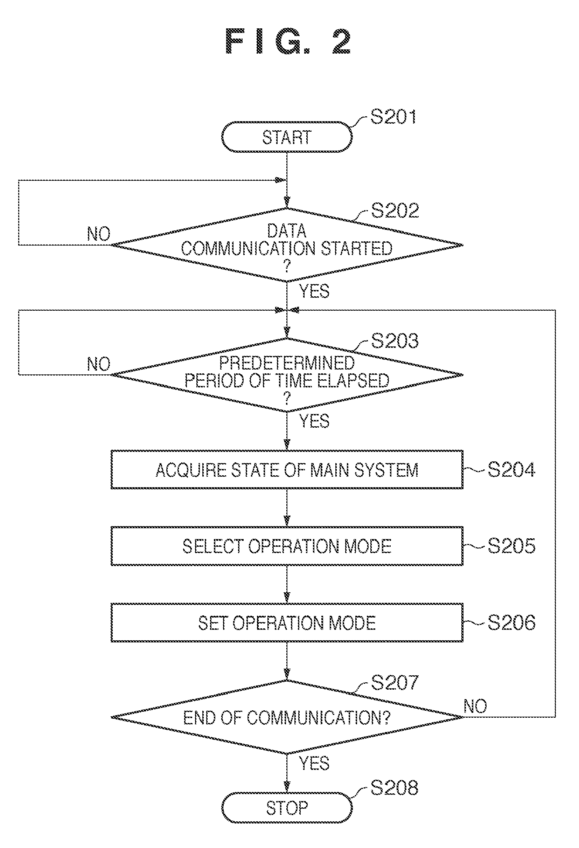

A procedure for communication control processing for setting an operation mode for the sub-system 102 will be described next with reference to Fig. 2. The communication apparatus shown in Fig. 1A executes a procedure in which the sub-system 102 recognizes the type of application currently executed in the main system 101 and its operation rate, the operation mode of the sub-system 102 is switched by referring to the lookup table in accordance with the recognized information.

In step S201, the apparatus starts this processing. In step S202, the apparatus determines whether the sub-system 102 has started data communication. If the sub-system 102 has started data communication (YES in step S202), the process advances to step S203. If the sub-system 102 has not started data communication (NO in step S202), the apparatus waits for the start of data communication. In this step, the apparatus determines whether the sub-system 102 has started data communication, regardless of the state of the main system 101. The inter-processor communication unit 117 notifies the main system 101 of the determination result obtained in this step, that is, the start of data communication by the sub-system 102.

In step S203, the sub-system 102 starts measuring the elapsed time from the start of data communication, and determines whether a predetermined time has elapsed. If the sub-processor 110 determines that the predetermined time has elapsed (YES in step S203), the process advances to step S204. If the sub-processor 110 determines that the predetermined time has not elapsed (NO in step S203), the sub-system 102 continues time measurement. In this step, the sub-system 102 measures the elapsed time by acquiring time information or the like from the timer 118, and determines whether the measurement result has exceeded a predetermined value (time). As the predetermined time, for example, a time between several ten ms (milliseconds) to several s (seconds) is set.

In step S204, the sub-system 102 acquires information indicating the operation state of the main system 101. The main processor 104 writes the information indicating the operation state of the main system 101 in the common memory 109. The main processor 104 notifies the sub-processor 110 of address information indicating a storage area in the common memory 109 by using the inter-processor communication unit 117. The sub-processor 110 reads information indicating the latest operation state of the main system 101, which is written in the common memory 109, by using the address information. The information indicating the operation state which is read in this case includes, for example, the type of application executed in the main system 101 and its operation rate.

In step S205, the mode selection control unit 113 selects an operation mode corresponding to the information indicating the operation state acquired in step S204 by referring to the lookup table stored in advance in the mode selection control unit 113.

In step S206, the apparatus sets the operation mode selected in step S205 as an operation mode for the sub-system 102. The mode selection control unit 113 outputs a system clock corresponding to the selected operation mode under the control of the sub-processor 110.

In step S207, the apparatus determines whether to finish the communication. If the sub-system 102 detects the end of the data communication (YES in step S207), the process advances to step S208 to finish the processing. If the sub-system 102 does not detect the end of the data communication (NO in step S207), the process returns to step S203 to repeat the same processing as described above. Since the apparatus sets an operation mode in a cycle of a predetermined period, it is possible to select an optimal operation mode in accordance with the operation state of the main system 101. In step S208, although the communication apparatus shown in Fig. 1A is active, the data communication by the sub-system 102 is complete.

According to this embodiment, it is possible to perform data communication upon setting an optimal operation mode for power consumption level control in accordance with a variation in communication rate or a change in the operation state of the communication apparatus due to various factors.

### (Second Embodiment)

A communication apparatus according to the second embodiment will be described with reference to Fig. 1A. A sub-system state detection unit 111 has a function of detecting the type of communication (communication standard) executed in a sub-system 102. The sub-system state detection unit 111 has a function of detecting the type of communication connection, that is, wired or wireless, or the kind of communication standard in use. More specifically, if the sub-system 102 is performing wireless communication, the sub-system state detection unit 111 detects whether the communication corresponds to IEEE802.11n standard or other standards such as the IEEE802.11b/g/a standards. If the sub-system 102 is performing wired communication, the sub-system state detection unit 111 determines whether the communication corresponds to the IEEE802.3u standard or other standards such as the IEEE802.3z standard.

A wired communication controller 114 and a wireless communication controller 115 include internal registers. The information to be written in each internal register includes information indicating whether the corresponding controller is active and information indicating the specific communication standard in use. The sub-system state detection unit 111 accesses the internal register of the wired communication controller 114 or wireless communication controller 115 to detect whether the sub-system is active and the communication standard in use.

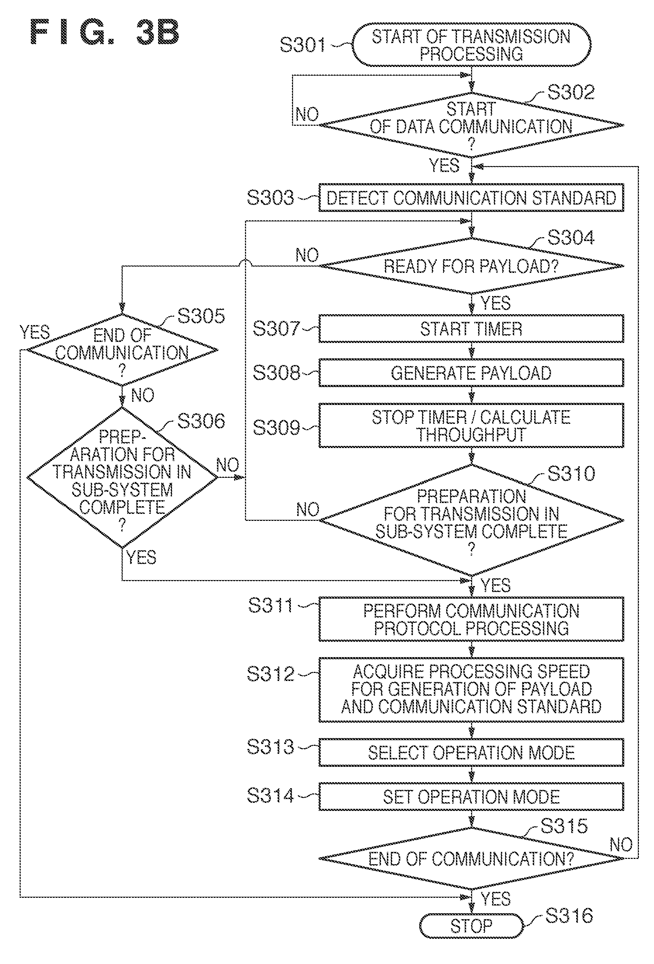

When the communication apparatus executes data transmission processing, a main system state detection unit 105 calculates the amount of information which can be prepared per unit time with a payload for data transmission being regarded as the throughput of an application. The main system state detection unit 105 starts a timer 118 at the start of the generation of a payload as transmission data. The main system state detection unit 105 then reads the measurement value (timer value) of the timer 118 at the completion of the generation of a payload. This makes it possible to acquire a payload generation time per transmission. At this time, a main processor 104 has notified the main system state detection unit 105 of the amount of information of a payload to be generated as transmission data. The main system state detection unit 105 calculates a processing speed (throughput) for payloads per unit time from the timer value and the amount of payload information based on these pieces of information. In the communication apparatus shown in Fig. 1A, when an application which performs data transmission is active, a main system 101 generates a payload as transmission data, and writes the generation result in a predetermined storage area in a common memory 109. At this time, the main system 101 also writes the calculated payload generating ability (the payload processing speed (throughput) per unit time) in a predetermined storage area in the common memory 109. The sub-system 102 reads out the payload portion generated by the main system 101 and the processing speed (throughput) for payloads from the common memory 109. Subsequently, information such as a header required for the sub-system 102 to perform communication protocol processing is added to the payload to complete the preparation for transmission by the sub-system. The sub-system 102 then transmits data to a communication partner via the wired communication controller 114 or the wireless communication controller 115. In this case, the sub-system 102 selects an operation mode for the sub-system 102 by using the information of the processing speed (throughput) for payloads in the main system 101 and communication standard in the sub-system 102. A procedure for the communication control processing of setting an operation mode in the sub-system when the communication apparatus executes data transmission processing will be described in more detail later with reference to Fig. 3B.

A processing procedure for setting an operation mode in the sub-system when the communication apparatus according to the second embodiment executes data transmission processing will be described with reference to Fig. 3B. This processing is data processing to be performed when an application which performs data transmission is activated in the communication apparatus. This apparatus switches the operation modes of the sub-system 102 in accordance with the communication standard used during data communication (data transmission) and the processing speed (throughput) for payloads in the main system 101.

In step S301, transmission processing starts. In step S302, the apparatus determines whether the sub-system 102 has started data communication. The sub-system 102 starts communication connection processing for data transmission in accordance with an instruction from an application activated in the main system 101. If the sub-system 102 starts data communication (YES in step S302), the process advances to step S303. If the sub-system 102 does not start data communication (NO in step S302), the apparatus waits for the start of data communication. When the sub-system 102 becomes ready for data communication (data transmission) afterward, the sub-system 102 notifies the main system 101 of the corresponding information via an inter-processor communication unit 117.

In step S303, the sub-system 102 detects the communication standard in use, and stores the detection result in the common memory 109. The sub-system state detection unit 111 accesses the internal register of the wired communication controller 114 or wireless communication controller 115 to read information indicating whether the sub-system is active and information indicating the communication standard in use. The sub-system state detection unit 111 then writes the detected information of the communication standard and the like in the common memory 109.

In step S304, the apparatus determines whether the main system 101 can generate a payload for data transmission (ready for payload generation). If the main system 101 can generate a payload (YES in step S304), the process advances to step S307. If the main system 101 cannot generate a payload (NO in step S304), the process advances to step S305.

In step S305, the apparatus determines whether the sub-system 102 has finished data communication (data transmission). If the apparatus detects a signal indicating the end of data communication (data transmission) (YES in step S305), the process advances to step S316 to terminate the processing. If the apparatus detects no signal indicating the end of data communication (data transmission) (NO in step S305), the process advances to step S306.

In step S306, the apparatus determines whether the sub-system 102 has completed preparation for the generation of a communication packet by adding header information and the like to the payload for the execution of communication protocol processing (sub-system transmission preparation completion). If the apparatus determines that preparation for sub-system transmission is complete (YES in step S306), the process advances to step S311. If the apparatus determines in step S306 that preparation for sub-system transmission is not complete (NO in step S306), the process returns to step S304 to repeat the same processing as described above.

Referring back to step S307, the main system state detection unit 105 starts the timer 118 in step S307. The main system state detection unit 105 starts the timer when the main processor 104 writes a predetermined value in a predetermined internal register.

In step S308, the main system 101 executes the processing of generating a payload for data transmission. More specifically, the main system 101 generates a payload for transmission to a communication partner in accordance with the application executed in the main system 101 under the control of the main processor 104. The size of a payload in this case becomes a data size necessary for the generation of a communication packet corresponding to one unit in accordance with the communication protocol used for data communication. The main processor 104 prepares a payload by writing it in a predetermined storage area in the common memory 109.

In step S309, the main system state detection unit 105 stops the timer 118, calculates a payload generation ability corresponding to one unit (a payload processing speed (throughput) per unit time), and writes the calculation result in a predetermined storage area in the common memory 109. The main system state detection unit 105 stops the timer 118 when the main processor 104 writes a predetermined value in a predetermined register. The main system state detection unit 105 detects the time taken for payload generation executed in step S308 by acquiring a measurement value (timer value) from the timer 118 at the time when it stops. The main system state detection unit 105 then calculates a processing speed (throughput) for the generation of a payload required for the formation of a communication packet corresponding to one unit from the size of the payload and the generation time which have already been notified from the main processor 104. The main system state detection unit 105 writes the calculated processing speed (throughput) in a predetermined storage area in the common memory 109, and terminates the processing. In this case, the main processor 104 has already notified the main system state detection unit 105 of address information in a storage area in the common memory 109 by using the inter-processor communication unit 117.

In step S310, the sub-system 102 adds header information and the like to the payload to execute communication protocol processing, and determines whether the preparation for the generation of a communication packet is complete (sub-system transmission preparation completion). If the sub-system 102 determines that preparation for sub-system transmission is complete (YES in step S310), the process advances to step S311. If the sub-system 102 determines that preparation for transmission is not complete (NO in step S310), the process returns to step S304 to repeat the same processing as described above.

In step S311, the apparatus transmits the generated communication packet to the communication partner via the wired communication controller 114 or the wireless communication controller 115. The unit of transmission of communication packets to a communication partner is one communication packet. In step S312, the apparatus acquires the information of the processing speed (throughput) for payloads in the main system 101 and the information of the communication standard used by the sub-system 102. The sub-system state detection unit 111 reads the latest information written in the common memory 109 by using the address information notified from the main processor 104.

In step S313, a mode selection control unit 113 selects an operation mode for the sub-system 102 by comparing the throughput for payloads and the information of the communication standard with a lookup table stored in advance in the mode selection control unit 113.

In step S314, the apparatus sets an operation mode for the sub-system 102 in accordance with the operation mode selected in step S313. The mode selection control unit 113 outputs a system clock corresponding to the operation mode selected by itself under the control of the sub-processor 110.

In step S315, the apparatus determines whether the communication in the sub-system 102 is complete. If the sub-system 102 detects a signal indicating the end of data transmission (YES in step S315), the data communication finishes (S316). If the sub-system 102 detects no signal indicating the end of data transmission, the process advances to step S303 to repeat the same processing as described above.

The processing to be performed at the time of reception of data in the communication apparatus will be described next. The main system state detection unit 105 has a function of detecting the throughput of an application with respect to the payload portion extracted from received data. In this case, the throughput indicates the ability of the main system 101 to process the payload extracted from the received data (communication packet) per unit time. When the communication apparatus has activated an application which performs reception processing of data, the sub-system 102 receives a communication packet from a communication partner via the wired communication controller 114 or the wireless communication controller 115.

The sub-system 102 extracts the payload from the received communication packet except for header information and the like required in terms of the communication protocol. The sub-system 102 then transfers the payload to the main system 101 in which the application is activated. The main system state detection unit 105 detects the throughput of the main system 101 per unit time from the time between the instant at which the main system 101 has received the payload and the instant at which the main system 101 becomes ready to receive the next payload and the amount of payload information which can be processed. The main system state detection unit 105 starts the timer 118 at the timing when the payload is transferred to the main system 101. The main system state detection unit 105 then stops the timer 118 at the timing when the main system 101 becomes ready to receive the next payload, and reads the measurement value (timer value) of the timer 118. At this time,
the main processor 104 has notified the main system state detection unit 105 of the amount of payload information processed. The main system state detection unit 105 calculates a processing speed (throughput) for payloads per unit time based on the amount of payload information and the timer value.

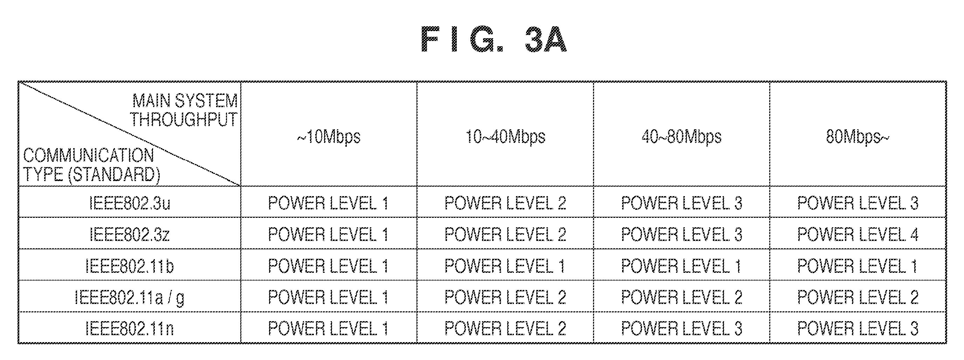

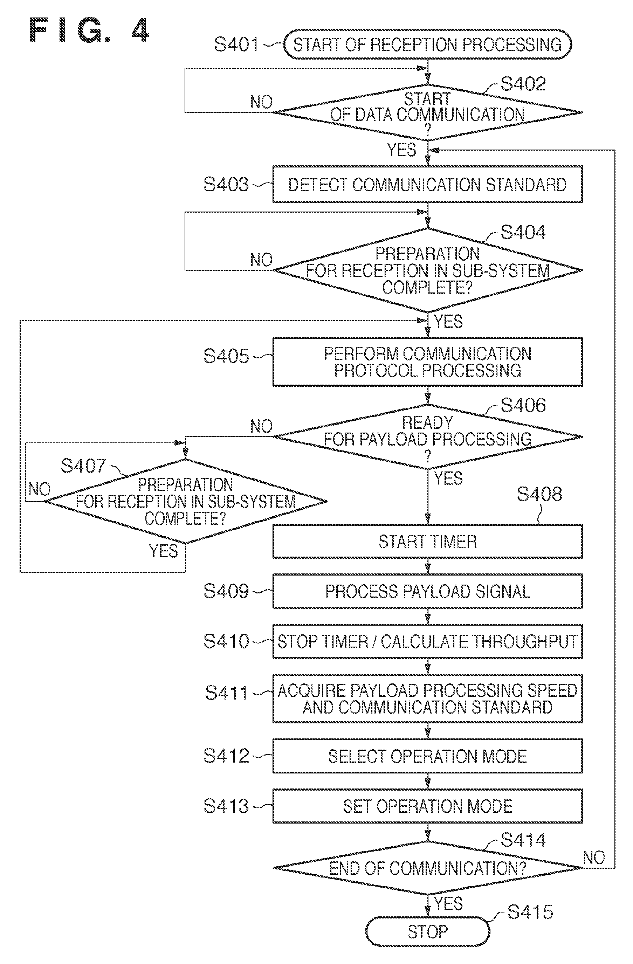

The mode selection control unit 113 internally stores in advance a lookup table like that shown in Fig. 3A. By referring to the lookup table in Fig. 3A, the mode selection control unit 113 can specify the operation mode (power level) of the sub-system 102 by using the throughput of the main system 101 and the communication standard in use as parameters. The mode selection control unit 113 determines an operation mode for the sub-system 102 by using the throughput for payloads processed by the application executed in the main system 101 as a row parameter of the lookup table, and the communication standard used in the sub-system 102 as a column parameter of the lookup table. Power levels 1 to 4 indicate operation modes of the sub-system 102 from the operation mode with the lowest power consumption level (to which power level 1 corresponds) to the operation mode with the highest power consumption level (to which power level 4 corresponds) in ascending order of power consumption levels. A procedure for operation mode setting processing in a sub-system when the communication apparatus executes reception processing of data will be described in detail later with reference to Fig. 4.

A procedure for operation mode setting processing in a sub-system when the communication apparatus according to the second embodiment executes reception processing of data will be described below with reference to Fig. 4. This processing is data processing to be performed when an application which performs data reception is activated in the communication apparatus. The apparatus switches the operation modes of the sub-system 102 in accordance with the communication standard used during data communication (data reception) and the processing speed (throughput) for payloads in the main system 101.

In step S401, reception processing starts. In step S402, the apparatus determines whether data communication has started. The apparatus starts communication connection processing for allowing the sub-system 102 to perform data reception, in accordance with an instruction from the application activated in the main system 101. If the sub-system 102 starts data communication (YES in step S402), the process advances to step S403. If the sub-system 102 does not start data communication (NO in step S402), the apparatus waits for the start of data communication. If the apparatus becomes ready for data communication (data reception), the inter-processor communication unit 117 notifies the main system 101 of the corresponding information.

In step S403, the apparatus detects the communication standard used in the sub-system 102, and stores the detection result in the common memory 109. The sub-system state detection unit 111 accesses the internal register of the wired communication controller 114 or wireless communication controller 115 to read information indicating whether the sub-system is active and information indicating the specific communication standard in use. The sub-system state detection unit 111 then writes the detected information indicating the communication standard and the like in the common memory 109.

In step S404, the apparatus determines whether the sub-system 102 has completed preparation for the extraction of a payload from a communication packet except for header information and the like (sub-system reception preparation completion). If the apparatus determines that preparation for reception by the sub-system 102 is complete (YES in step S404), the process advances to step S405. If the apparatus determines that preparation for reception by the sub-system 102 is not complete (NO in step S404), the apparatus waits for the completion of preparation for reception.

In step S405, the sub-system 102 extracts a payload from the communication packet received from the communication partner except for information such as a header. For example, the sub-system 102 executes this processing for each communication packet received from the communication partner via the wired communication controller 114 or the wireless communication controller 115. The sub-system 102 writes the extracted payload in a predetermined storage area in the common memory 109.

In step S406, the apparatus determines whether the main system 101 can process the payload extracted from the communication packet. If the apparatus determines that the main system 101 can process the payload (YES in step S406), the process advances to step S408. If the apparatus determines that the main system 101 cannot process the payload (NO in step S406), the process advances to step S407. In this case, that the main system 101 "can process the payload" indicates, for example, a case in which the main system 101 is ready to receive the payload extracted from the communication packet or a state in which the payload can be stored in a processing buffer memory or the like.

In step S407, the apparatus determines whether the sub-system 102 has completed preparation for the extraction a payload from the communication packet except for header information and the like (sub-system reception preparation completion). If the apparatus determines that the sub-system 102 has completed preparation for reception (YES in step S407), the process advances to step S405. If the apparatus determines that the sub-system has not completed preparation for reception (NO in step S407), the process returns to step S406.

If the apparatus determines that the main system 101 can process the payload (YES in step S406), the process advances to step S408. In step S408, the main system state detection unit 105 starts the timer 118. The main system state detection unit 105 starts the timer 118 when the main processor 104 writes a predetermined value in a predetermined internal register.

In step S409, the main system 101 in which the application is activated executes desired signal processing for the payload received from the sub-system 102 under the control of the main processor 104. The size of this payload is equal to that of the payload extracted from a communication packet corresponding to one unit in accordance with the communication protocol used for data communication. The main system 101 starts this processing when the main processor 104 reads the payload from a predetermined storage area in the common memory 109.

In step S410, the main system state detection unit 105 stops the timer 118, calculates a throughput for a unit payload, and writes the calculation result in the common memory 109. The main system state detection unit 105 stops the timer 118 when the main processor 104 writes a predetermined value in a predetermined internal register. The main system state detection unit 105 then calculates the processing time taken for the payload processing executed in step S409 by acquiring the measurement value (timer value) at the time when the timer 118 stops. Thereafter, the main system state detection unit 105 calculates a processing speed (throughput) for the payload extracted from the communication packet corresponding to one unit from the size of the payload and the processing time which have already been notified from the main processor 104. The main system state detection unit 105 writes the calculated processing speed (throughput) in the common memory 109. In this case, the main processor 104 notifies in advance the main system state detection unit 105 of the address information of a storage area in the common memory 109 by using the inter-processor communication unit 117.

In step S411, the sub-system state detection unit 111 acquires the payload processing speed in the main system 101 and the information of the communication standard used in the sub-system 102. The sub-system state detection unit 111 reads the latest payload processing speed and the information of the communication standard used in the sub-system 102 which are written in the common memory 109 by using the address information notified by using the inter-processor communication unit 117.

In step S412, the mode selection control unit 113 selects an operation mode for the sub-system 102 by comparing the throughput for the payload and the information of the communication standard with the lookup table stored in advance in the mode selection control unit 113.

In step S413, the apparatus sets the operation mode for the sub-system 102 in accordance with the operation mode selected in step S412. The mode selection control unit 113 outputs a system clock corresponding to the operation mode selected by itself under the control of the sub-processor 110.

In step S414, the apparatus determines whether the sub-system 102 has completed the communication. If the apparatus detects a signal indicating the end of the data transmission in the sub-system 102 (YES in step S414), the apparatus terminates the data communication (S415). If the apparatus detects no signal indicating the end of the data transmission, the process advances to step S403 to repeat the same processing as described above.

According to this embodiment, it is possible to set a proper operation mode for power consumption level control and perform data communication in accordance with the throughput for transmission data, the throughput for received data, and the communication type.

### (Third Embodiment)

A communication apparatus according to the third embodiment will be described with reference to Fig. 1A. A sub-system 102 of this communication apparatus has a function of performing data communication with a communication partner by using the TCP/IP protocol via a wired communication controller 114 or a wireless communication controller 115. The sub-system 102 performs connection by specifying a communication partner and an application used for communication using a socket expressed by a combination of a network address (including, for example, an IP address; a network address will be written as an "IP address" hereinafter) and a port number. The application activated in a main system 101 selects and determines a communication partner. The main system 101 therefore manages socket information for specifying a communication partner.

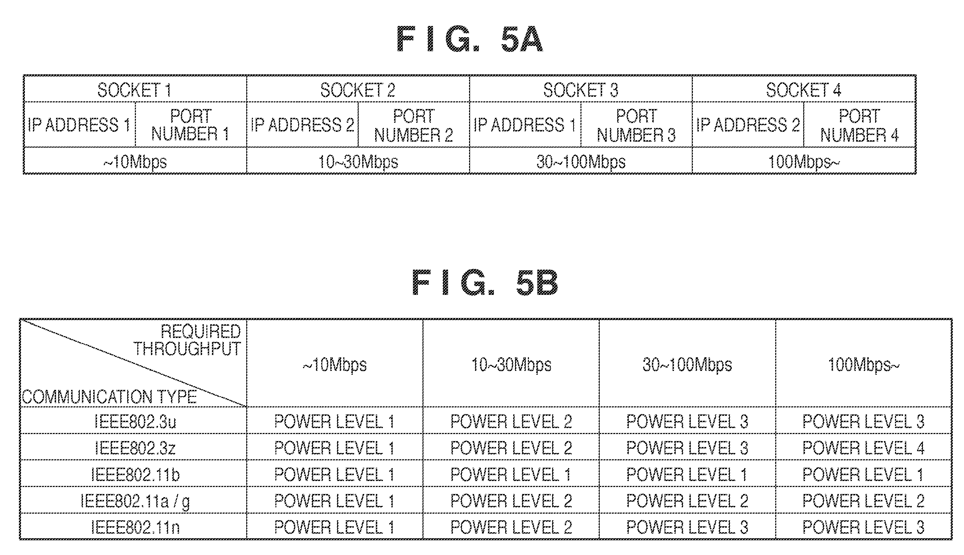

Fig. 5A is a view showing the correspondence relationship between socket information and the throughput (required throughput) required by each application executed by the communication apparatus. An IP address specifies a communication partner. A port number specifies an application for data communication with the communication partner. Even with the same communication partner (IP address), different port numbers (different applications) to be used require different throughputs. For example, socket 1 is constituted by a combination of IP address 1 and port number 1, and requires a threshold of 10 Mbps or less. When using socket 1, since the corresponding application is, for example, for transmitting and receiving control commands, 10 Mpbs or less is sufficient as the required throughput. Likewise, socket 2 is constituted by a combination of IP address 2 and port number 2, and is used for an application with a required throughput of about 10 Mbps to 50 Mbps. Although socket 3 has the same IP address as that of socket 1, their port numbers differ from each other. In this case, socket 3 corresponds to the same communication partner as that of socket 1, but the application of socket 3 requires a throughput higher than that of socket 1 as in a case in which the application is for the streaming of video data. The same applies to socket 4. Although socket 4 has the same IP address as that of socket 2, their port numbers differ from each other. In this case, socket 4 corresponds to the same communication partner as that of socket 2, but the application specified by port number 4 requires a throughput higher than that required by the application specified by port number 2.

A main processor 104 of the communication apparatus stores socket information in a predetermined storage area in a common memory 109. The common memory 109 stores, in its storage area, IP addresses, port numbers, and required throughputs in association each other. The main processor 104 adds new socket information to the storage area in the common memory 109. When the contents of already stored socket information have changed, the main processor 104 updates the contents of existing socket information.

Fig. 5B shows a lookup table for selecting an operation mode for the sub-system 102 by using the throughput (required throughput) for communication required in the main system 101 and the communication standard in use as parameters. This apparatus determines an operation mode by using the throughput value required by the application executed in the main system 101 as a row parameter, and the communication standard used by the sub-system 102 as a column parameter. Power levels 1 to 4 indicate operation modes of the sub-system 102 from the operation mode with the lowest power consumption level (to which power level 1 corresponds) to the operation mode with the highest power consumption level (power level 4) in ascending order of power consumption levels. The mode selection control unit 113 stores in advance a lookup table like that shown in Fig. 5B.

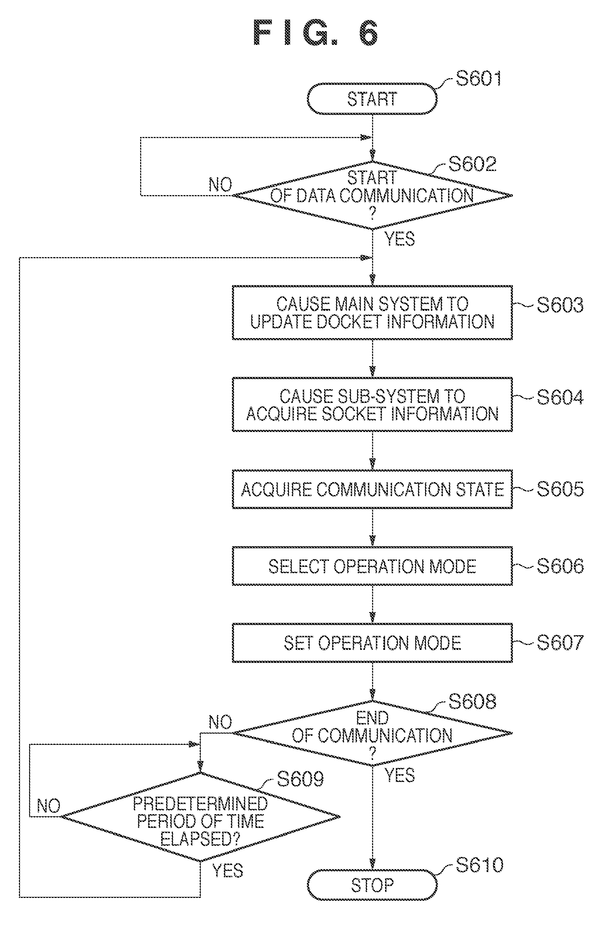

A processing procedure for setting an operation mode for the sub-system 102 in the communication apparatus according to the third embodiment will be described next with reference to Fig. 6. In step S601, the processing starts. At this stage, the communication apparatus shown in Fig. 1A is active, and is ready to start data communication using the sub-system 102.

In step S602, the apparatus determines whether the sub-system 102 has started data communication. In accordance with an instruction from the application activated in the main system 101, the sub-system 102 starts communication connection processing for data transmission. When the sub-system 102 starts data communication (YES in step S602), the process advances to step S603. If the sub-system 102 does not start data communication (NO in step S602), the apparatus waits for the start of data communication. When the sub-system 102 becomes ready for data communication afterward, an inter-processor communication unit 117 notifies the main system 101 of the corresponding information.

In step S603, the main processor 104 stores, as socket information, the application executed in the main system 101, a communication partner (IP address), and the required throughput of the application in the common memory 109. The main processor 104 then notifies the sub-processor 110 of address information indicating a storage area in the common memory 109 by using the inter-processor communication unit 117.

In step S604, a sub-processor 110 of the sub-system 102 acquires the socket information stored in step S603 from the common memory 109 by using the address information notified from the main processor 104.

In step S605, a sub-system state detection unit 111 accesses the internal register of the wired communication controller 114 or wireless communication controller 115 to read information indicating whether the sub-system is active and information indicating the specific communication standard in use. The sub-system state detection unit 111 then writes the read information indicating the communication standard and the like in the common memory 109.

In step S606, the apparatus compares the socket information acquired in step S604 and the information of the communication standard acquired in step S605 with a lookup table (Fig. 5B) stored in advance in a mode selection control unit 113. The mode selection control unit 113 selects a power level for the sub-system 102 which corresponds to row and column parameters of the lookup table in accordance with the comparison result. In step S607, the power level selected in step S606 described above is set as an operation mode for the sub-system 102.

In step S608, the apparatus determines whether to finish the communication. If the sub-system 102 detects the end of the data communication (YES in step S608), the process advances to step S610. If the sub-system 102 does not detect the end of the data communication (NO in step S608), the process advances to step S609. If the sub-processor 110 determines, upon measuring a predetermined period of time, in step S609 that the predetermined period of time has elapsed (YES in step S609), the process returns to step S603 to repeat the same processing as described above. If the sub-processor 110 determines that the predetermined period of time has not elapsed (NO in step S609), the apparatus waits for the elapse of the predetermined period of time. When communication starts (YES in step S602), the apparatus starts a timer 118 to start measuring the time. The sub-system 102 measures the time elapsed from the start of the communication by acquiring time information from the timer 118, and determines the elapse of the predetermined period of time depending on whether the measurement result exceeds a predetermined value (a predetermined elapsed time). For example, the elapsed time can be set to several ten ms (milliseconds) to several s (seconds). If the apparatus determines in step S608 that the communication state continues, it is possible to select an optimal operation mode for the sub-system 102 by the processing in steps S603 to S607, with a predetermined elapsed time being a unit (in a predetermined cycle).

According to this embodiment, it is possible to set a proper operation mode for power consumption level control and perform data communication in accordance with conditions such as the application to be used, throughput required by a communication partner, and the communication type to be used.

### (Fourth Embodiment)

A communication apparatus according to the fourth embodiment will be described with reference to Fig. 1A. A sub-system 102 has a function of performing data communication with a communication partner by using a wireless LAN standard via a wireless communication controller 115. This apparatus performs QoS control so as to set priority levels to the respective data types to be transferred and can give a transmission opportunity to a data type with a high priority level. In this case, QoS control is that defined in IEEE802.11e, and the priority levels of transmission data are defined as access categories.

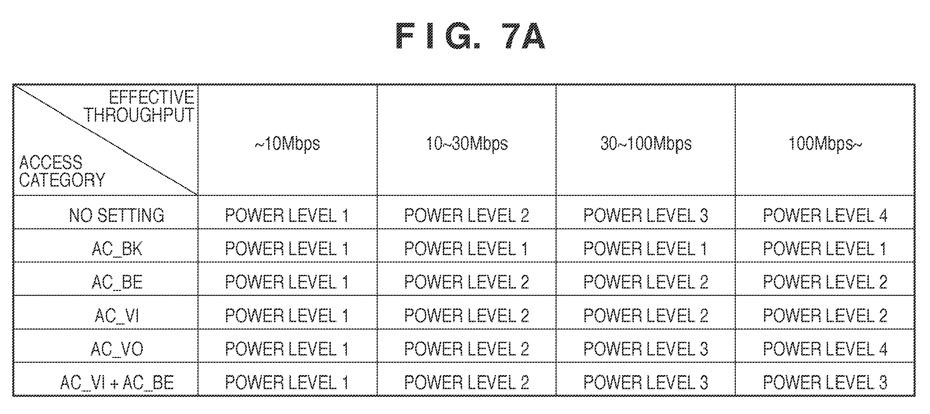

Fig. 7A is a lookup table for selecting an operation mode for the sub-system 102 by using the effective throughput obtained by actual data communication and the access category of data to be transferred. The apparatus determines an operation mode for the sub-system 102 by using the value of the effective throughput measured by the sub-system 102 as a row parameter, and the access category set in data to be transmitted from the sub-system 102 as a column parameter. Power levels 1 to 4 in the lookup table indicate operation modes of the sub-system 102 from the operation mode with the lowest power consumption level (to which power level 1 corresponds) to the operation mode with the highest power consumption level (to which power level 4 corresponds) in ascending order of power consumption levels. A mode selection control unit 113 stores in advance a lookup table like that shown in Fig. 7A.

Referring to Fig. 7A, when no access category is set (no setting), the power level is switched from 1 to 2, from 2 to 3, and from 3 to 4 as the measured effective throughput increases. In contrast to this, when an access category is set, the apparatus selects a power level corresponding to the measured effective throughput and the set access category.

A method of measuring an effective throughput in the sub-system 102 will be described next. A sub-system state detection unit 111 starts a timer 118 at the timing when a sub-processor 110 starts communication packet generation processing of, for example, adding header information, based on a communication protocol. The sub-system state detection unit 111 then stops the timer 118 at the timing when the sub-processor 110 can execute generation processing of the next communication packet or a communication packet next to a plurality of packets. The sub-system state detection unit 111 reads the measurement value (timer value) of the timer 118, and resets the timer 118. The sub-system state detection unit 111 calculates an effective throughput in data transmission from the amount of information of a communication packet during measurement by the timer 118 and the timer value.

A main processor 104 of the communication apparatus stores the access category of data (transmission data) as a transmission target generated by the application executed in a main system 101 in a predetermined storage area in a common memory 109.
When the main system 101 transfers the transmission data to the sub-system 102, access category information is also transferred as data type information. Upon receiving the transmission data and the access category, the sub-system 102 generates a communication packet conforming to the access category, and transmits the generated communication packet to the communication partner via the wireless communication controller 115.

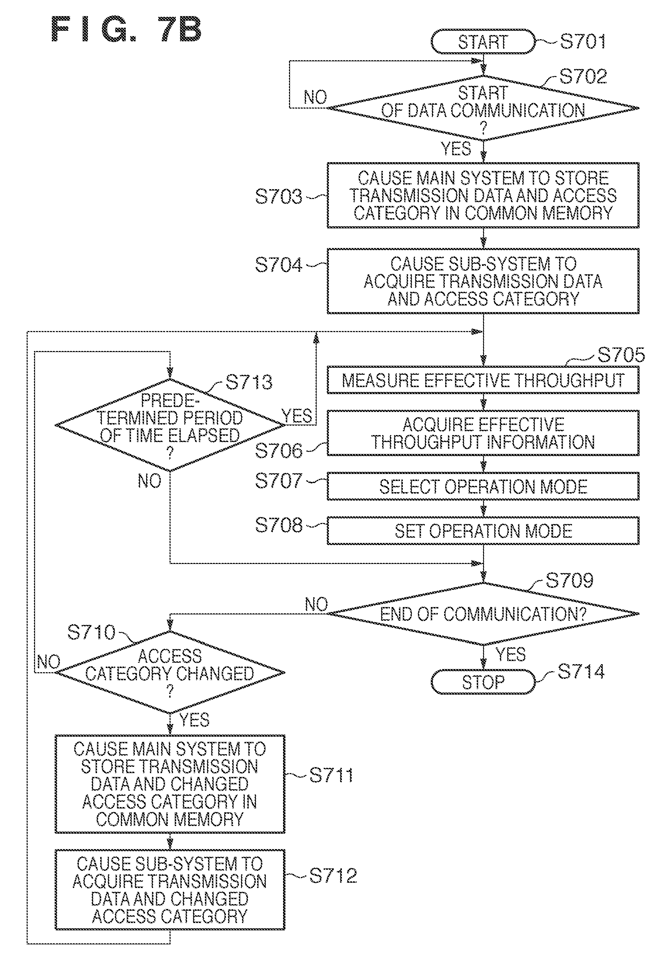

A processing procedure for setting an operation mode for the sub-system 102 in the communication apparatus according to the fourth embodiment will be described next with reference to Fig. 7B. In step S701, the processing starts. At this stage, the communication apparatus shown in Fig. 1A is active, and is ready to start data communication using the sub-system 102.

In step S702, the apparatus determines whether the sub-system 102 has started data communication. In accordance with an instruction from the application activated in the main system 101, the sub-system 102 starts communication connection processing for data transmission. When the sub-system 102 starts data communication (YES in step S702), the process advances to step S703. If the sub-system 102 does not start data communication (NO in step S702), the apparatus waits for the start of data communication. When the sub-system 102 becomes ready for data communication afterward, an inter-processor communication unit 117 notifies the main system 101 of the corresponding information.

In step S703, the main processor 104 stores the transmission data generated by the application activated in the main system 101 and the access category of the transmission data in a predetermined storage area in the common memory 109. The main processor 104 then notifies the sub-processor 110 of address information indicating a storage area in the common memory 109 by using the inter-processor communication unit 117.

In step S704, a sub-processor 110 accesses the storage area in the common memory 109 by using the notified address information to acquire the transmission data and the access category.

In step S705, the sub-system state detection unit 111 of the sub-system 102 measures the actual throughput (effective throughput) required at the time of the transmission of the data. The sub-system state detection unit 111 temporarily stores the measurement result in the sub-system 102. In step S706, the sub-processor 110 reads the information of the effective throughput temporarily stored in step S705.

In step S707, the apparatus selects a power level by comparing the transmission data and access category acquired in step S704, the effective throughput acquired in step S706, and the lookup table (Fig. 7A) stored in the mode selection control unit 113.

In step S708, the apparatus sets the power level selected in step S707 described above as an operation mode for the sub-system 102. Upon setting the operation mode, the apparatus outputs a clock frequency corresponding to the set operation mode as a system clock for the sub-system 102.

In step S709, the apparatus determines that the sub-system 102 has finished the communication. If the apparatus detects a signal indicating the end of data transmission in the sub-system 102 (YES in step S709), the apparatus terminates the data communication (S714). In step S714, the data communication by the sub-system 102 has finished, but the communication apparatus is active. If the apparatus detects no signal indicating the end of data transmission (NO in step S709), the process advances to step S710.

In step S710, the sub-processor 110 acquires the information of the access category stored in the common memory 109 at a predetermined timing to determine whether the information of the access category has changed. If the access category has not changed (NO in step S710), the process advances to step S713. In step S713, the sub-processor 110 measures a predetermined period of time. If the sub-processor 110 determines that the predetermined period of time has elapsed (YES in step S713), the process returns to step S705 to repeat the same processing as described above. If the sub-processor 110 determines that the predetermined period of time has not elapsed (NO in step S713), the process advances to step S709 to determine the end of communication. When communication starts (YES in step S702), the apparatus starts the timer 118 to start measuring the time. The sub-system 102 measures the time elapsed from the start of the communication by acquiring time information from the timer 118, and determines the elapse of the predetermined period of time depending on whether the measurement result exceeds a predetermined value (a predetermined elapsed time).

If the sub-processor 110 determines in step S710 that the access category has changed (YES in step S710), the process advances to step S711. When the application activated in the main system 101 shifts from a video data streaming state to a file transfer state, the access category shifts from AC_VI to AC_BE. When the apparatus transmits a control command during video data streaming, the access category shifts from AC_VI to a combination of two types of access categories including AC_VI and AC_BE. When the sub-processor 110 detects, for example, the above change in the access category, the sub-processor 110 determines that the access category has changed.

In step S711, the main processor 104 stores the transmission data generated by the application activated in the main system 101 and the changed access category in a predetermined storage area in the common memory 109. The main processor 104 then notifies the sub-processor 110 of address information indicating the storage area in the common memory 109 by using the inter-processor communication unit 117.

In step S712, the sub-processor 110 accesses the storage area in the common memory 109 by using the notified address information to acquire the transmission data and the changed access category. The process then returns to step S706 to repeat the same processing as described above.

According to this embodiment, it is possible to set a proper operation mode for power consumption level control and perform data communication in accordance with changes in the operation state of the communication apparatus such as access category setting and an effective throughput.

### (Fifth Embodiment)

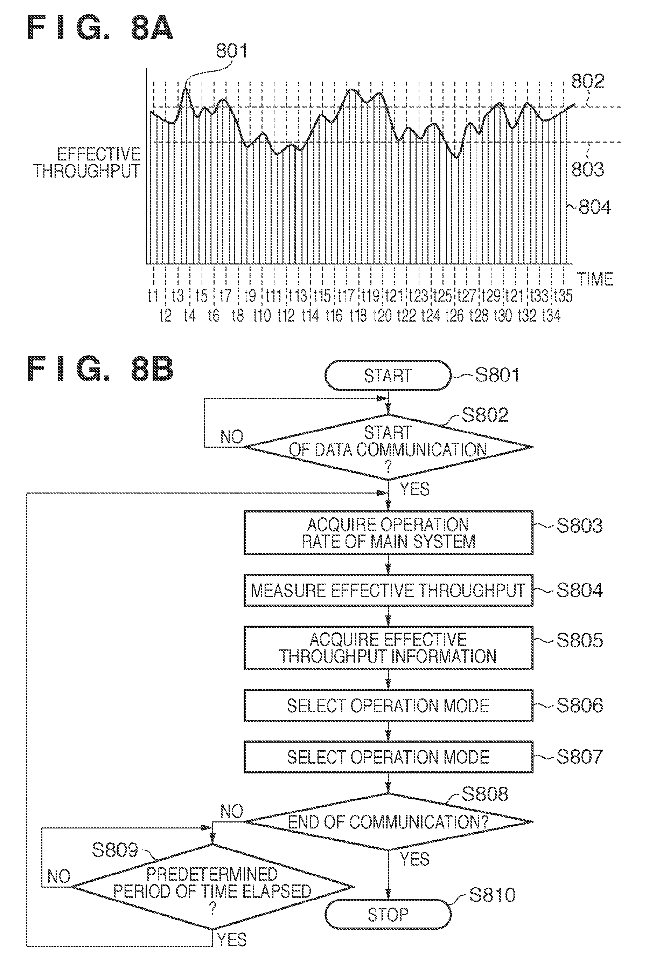

A communication apparatus according to the fifth embodiment will be described with reference to Fig. 1A. Fig. 8A is a graph showing changes in effective throughput over time when the communication apparatus is in a communication state. A waveform 801 indicates how the effective throughput varies over time due to various factors. Factors that cause the effective throughput to vary include, for example, congestion on a network and variations in the reception or transmission power of a communication partner apparatus over time. In case of wireless communication, a deterioration in the communication quality of a wireless communication path and the like are also factors that cause variations in effective throughput. First and second levels 802 and 803 respectively indicate the specified levels of effective throughputs, which are defined in a sub-system 102. The first level 802 is defined to a value higher than that of the second level 803. This value is set in advance in a sub-system state detection unit 111.

A bar chart 804 indicates the measurement results of effective throughputs measured by the sub-system 102 at sampling times (t1, t2,..., t35,....).

A processing procedure for setting an operation mode for the sub-system 102 in the communication apparatus according to the fifth embodiment will be described next with reference to Fig. 8B. The following description is an example of processing in this embodiment, that is, a processing procedure for selecting and setting an operation mode in accordance with a change in effective threshold while the apparatus performs data transmission in a high-performance operation mode (power level 4) in which the apparatus operates at an operation clock with the highest frequency. In step S801, the processing starts. The communication apparatus shown in Fig. 1A is active, and is ready to start data communication using the sub-system 102.

In step S802, the apparatus determines whether the sub-system 102 has started data communication. In accordance with an instruction from the application activated in a main system 101, the sub-system 102 starts communication connection processing for data transmission. When the sub-system 102 starts data communication (YES in step S802), the process advances to step S803. If the sub-system 102 does not start data communication (NO in step S802), the apparatus waits for the start of data communication. When the sub-system 102 becomes ready for data communication afterward, an inter-processor communication unit 117 notifies the main system 101 of the corresponding information. Assume that the sub-system 102 performs communication processing in the operation mode corresponding to power level 4.

In step S803, the sub-processor 110 reads information indicating the latest operation rate of the main system 101 written in a common memory 109. A procedure for a method of acquiring an operation rate is the same as that described in the first embodiment, and hence a description of the procedure will be omitted.

In step S804, the sub-system state detection unit 111 measures an effective throughput for transmission data. The measurement result obtained by the sub-system state detection unit 111 is temporarily stored in the sub-system 102. A procedure for a method of measuring an effective throughput is the same as that described in the fourth embodiment, and hence a description of the procedure will be omitted.

In step S805, a sub-processor 110 then reads the information of the effective throughput temporarily stored in step S804 described above.

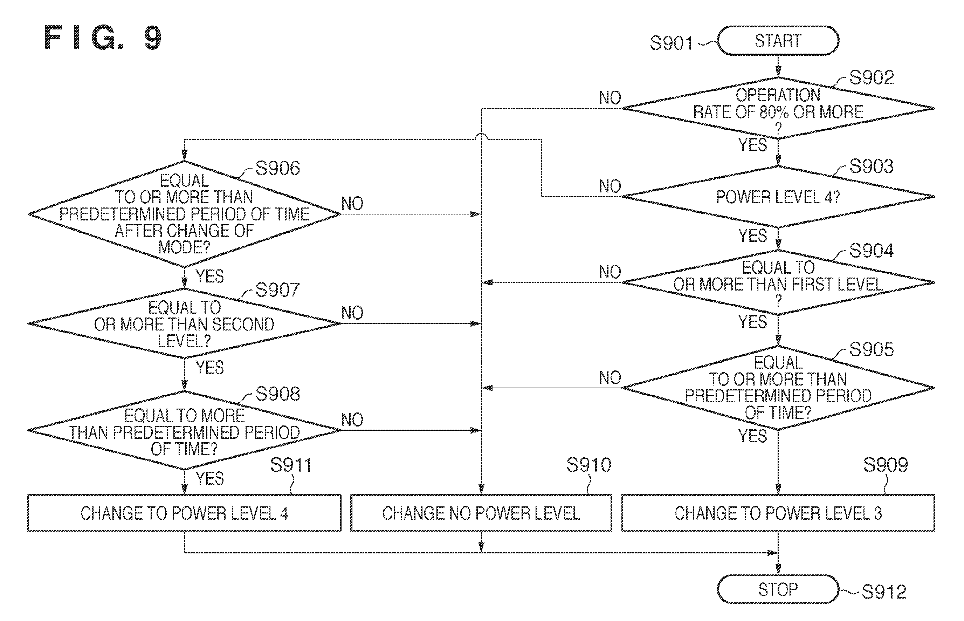

In step S806, the apparatus selects an operation mode for the sub-system 102 by executing the algorithm described with reference to Fig. 9 by using the operation rate acquired in step S803 and the effective throughput acquired in step S805. A concrete processing procedure in Fig. 9 will be described later.

In step S807, the apparatus sets the power level selected in step S806 described above as an operation mode for the sub-system 102. Upon setting the operation mode, the apparatus outputs a clock frequency corresponding to the set operation mode as a system clock for the sub-system 102.

In step S808, the apparatus determines that the sub-system 102 has finished communication. If the apparatus detects a signal indicating the end of data transmission in the sub-system 102 (YES in step S808), the apparatus terminates the data communication (S810). In step S810, the data communication by the sub-system 102 has finished, but the communication apparatus is active. If the apparatus detects no signal indicating the end of data transmission (NO in step S808), the process advances to step S809.

In step S809, the sub-processor 110 measures a predetermined period of time. If the apparatus determines that the predetermined period of time has elapsed (YES in step S809), the process returns to step S803 to repeat the same processing as described above. If the apparatus determines that the predetermined period of time has not elapsed (NO in step S809), the apparatus waits for the elapse of the predetermined period of time. In this case, the predetermined period of time corresponds to the time sampling interval (for example, t1 to t2, t2 to t3,..., t34 to t35) shown in Fig. 8A.

A concrete procedure for the processing executed in step S806 in Fig. 8B will be described next with reference to Fig. 9. The apparatus executes this processing by using the operation rate acquired in step S803 and the effective throughput acquired in step S805. In step S901, this processing starts. In step S902, the sub-system 102 determines whether the operation rate of the main system 101 exceeds 80%. If the sub-system 102 determines that the operation rate of the main system 101 is equal to or more than 80% (YES in step S902), the process advances to step S903. A state in which the operation rate of the main system 101 exceeds 80% can be assumed to be a state in which the power consumption is high. Such a state is a factor that causes a rise in device temperature inside the apparatus. If the temperature rises to a specified temperature or more, it is necessary to secure the stable operation and the like of the device.

If the sub-system 102 determines that the operation rate is less than 80% (NO in step S902), the process advances to step S910. In step S910, the apparatus terminates the processing without changing the power level (S912).

In step S903, the apparatus determines whether the operation mode of the sub-system 102 is set to power level 4. If the apparatus determines that the operation mode of the sub-system 102 is set to power level 4 (YES in step S903), the process advances to step S904. If the apparatus determines that the operation mode is not set to power level 4 (NO in step S903), the process advances to step S906. In this case, power level 4 indicates a power level corresponding to an operation mode with a high power consumption level.

In step S904, the apparatus determines whether the effective throughput for communication in the sub-system 102 is equal to or more than the first level specified in advance. If the apparatus determines that the effective throughput for communication in the sub-system 102 is equal to or more than the first level (YES in step S904), the process advances to step S905. Referring to the sampling times in Fig. 8A, the sampling timings at which the apparatus determines that the effective throughput is equal to or more than the first level are t4, t7, t17, t18, t19, t20, and t32. The states corresponding to t4, t7, t17, t18, t19, t20, and t32 are the states in which the operation rate of the main system 101 is equal to or more than 80%, and the effective throughput of the sub-system 102 is high. Such states impose high loads on the apparatus as a whole.

In contrast, if the apparatus determines that the effective throughput is less than the first level (NO in step S904), the process advances to step S910. In step S910, the apparatus terminates the processing without changing the power level (S912).

In step S905, the apparatus determines whether the period during which the effective throughput for communication in the sub-system 102 has been continuously equal to or more than the first level is equal to or more than a predetermined period of time. If the apparatus determines that the period during which the effective throughput for communication in the sub-system 102 has been continuously equal to or more than the first level is equal to or more than a predetermined period of time (YES in step S905), the process advances to step S909 to change the power level to power level 3 corresponding to an operation mode with a low power consumption level (S909). The apparatus then terminates the processing. A case in which the period during which the effective throughput has been continuously equal to or more than the first level is equal to or more than the predetermined period of time will be described with reference to the sampling times in Fig. 8A. For example, this period corresponds to the interval between sampling timings t16 and t20. In the interval between sampling timings t16 and t20, a state in which the operation rate of the main system 101 is equal to or more than 80%, and the effective throughput of the sub-system 102 is high has continued for a predetermined period of time. In this state, the temperature of the overall apparatus rises due to a high load, and hence the operation mode is changed to power level 3 with power consumption lower than that of power level 4. In the case of step S909, the power level is set/changed to power level 3 as a power level with low power consumption. However, the present invention is not limited to this example. For example, it is possible to change the power level to power level 2 or power level 1.

In step S906, the apparatus determines whether the predetermined period of time has elapsed since the operation mode of the sub-system 102 was changed from power level 4 to power level 3. If the apparatus determines that the predetermined period of time has elapsed (YES in step S906), the process advances to step S907. Referring to the sampling times in Fig. 8A, the sampling timings at which the apparatus determines that the predetermined period of time has elapsed since the operation mode was changed correspond to, for example, the sampling timings after t25. Assume that the operation mode has been switched at timing t20. If the interval from t21 to t24 is a constant interval, sampling timings corresponding to the predetermined period of time or more are those after t25.

If the apparatus determines in step S906 that the apparatus determines that the predetermined period of time has not elapsed (NO in step S906), the process advances to step S910. In step S910, the apparatus terminates the processing without changing the power level (S912). For example, the apparatus maintains the settings corresponding to power level 3.

In step S907, the apparatus determines whether the effective throughput for communication in the sub-system 102 has become equal to or more than second level 803 specified in advance. If the apparatus determines that the effective throughput is equal to or more than second level 803 (YES in step S907), the process advances to step S908. Referring to the sampling times in Fig. 8A, the timings at which the apparatus determines that the effective throughput is equal to or more than second level 803 correspond to sampling timings t25 and t27 to t35. Sampling timings t25 and t27 to t35 are those at which the effective throughput becomes equal to or more than second level 803 after a lapse of a predetermined period of time upon a change from power level 4 to power level 3.

If the apparatus determines in step S907 that the effective throughput is equal to or more than the second level (NO in step S907), the process advances to step S910. In step S910, the apparatus terminates the processing without changing the power level (S912). For example, the apparatus maintains the settings corresponding to power level 3.

In step S908, the apparatus determines whether the period during which the effective throughput for communication in the sub-system 102 has been continuously equal to or more than second level 803 is equal to or more than a predetermined period of time. If the apparatus determines that the period during which the effective throughput for communication in the sub-system 102 has been equal to or more than second level 803 is equal to or more than the predetermined period of time (YES in step S908), the process advances to step S911. A case in which the apparatus determines that the period during which the effective throughput has been equal to or more than the second level is equal to or more than the predetermined period of time will be described with reference to the sampling times in Fig. 8A. Assume that the operation mode is changed to power level 3 at sampling timing t20. If the period during which the effective throughput becomes equal to or more than the second level is equal to or more than the predetermined period of time (for example, the interval corresponding to the sampling interval from t27 to t29) after a lapse of a predetermined period of time (for example, the interval from t21 to t24) upon this change, the process advances to step S911.

If the apparatus determines in step S908 that the period during which the effective throughput has continuously become equal to or more than second level 803 is equal to or more than the predetermined period of time (NO in step S908), the process advances to step S910. In step S910, the apparatus terminates the processing without changing the power level (S912). For example, the apparatus maintains the settings corresponding to power level 3 in the interval from t27 to s29.

In step S911, the apparatus changes the operation mode of the sub-system 102 from power level 3 to power level 4. To change the operation mode from power level 3 to power level 4 is to increase the throughput for communication by increasing the system clock of the sub-system 102. Referring to the sampling times in Fig. 8A, the apparatus changes the operation mode from power level 3 to power level 4 immediately after t29, that is, at sampling timing t30, and terminate the processing (S912). In step S912, the apparatus terminates this processing (step S806 in Fig. 8B). The process advances to step S807 in Fig. 8B.

According to this embodiment, it is possible to perform data communication by setting a proper operation mode for power consumption level control in accordance with a change in the operation state of the communication apparatus, for example, a change in operation rate or effective throughput.

### Other Embodiments

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A communication apparatus comprising:
a sub-system (102) configured to transmit and receive data;
a main system (101) configured to process data received by said sub-system (102)and generate data to be transmitted from said sub-system(102); and
first detection means (105) for detecting an operation state of said main system(101),
said sub-system (102) comprising:
second detection means (111) for detecting an operation state of said sub-system(102);
selection means (113) for selecting a power mode for said sub-system (102) based on a detection result obtained by said first detection means (105) and a detection result obtained by said second detection means (111); and
communication means (110,112,114,115) for performing communication in the power mode selected by said selection means(113).

2. An apparatus according to claim 1, wherein said second detection means (111) is configured to detect a type of communication used by said communication means (110,112,114,115).

3. An apparatus according to claim 2, wherein: said main system (101) further comprises generating means (104) for generating data for transmission to be transmitted from said communication means (110,112,114,115),
said first detection means(105) is configured to measure a data throughput indicating an amount of information, which allows said generating means(104) to generate the data for transmission per unit time, and
said selection means(113) is configured to selects a power mode for said sub-system(102) based on the data throughput measured by said first detection means(105) and the type of communication detected by said second detection means (111).

4. An apparatus according to claim 2, wherein: said first detection means(105) is configured to calculate a throughput required by said main system (101) from a network address for specifying a communication partner and information for specifying an application used for generating transmission data or processing received data, and
said selection means(113) is configured to select a power mode for said sub-system(102) based on the throughput calculated by said first detection means(105) and the type of communication detected by said second detection means (111).

5. An apparatus according to claim 2, wherein: said sub-system(102) further comprises measurement means (111, S804) for measuring an actual throughput required for said communication means(110,112,114,115) to transmit data, and
said selection means(113) is configured to select a power mode for said sub-system(102) based on an access category which determines a priority level of transmission processing for the data and the actual throughput measured by said measurement means(110).

6. An apparatus according to claim 2, wherein: said main system(101) further comprises acquisition means(105, S803) for acquiring an operation rate of said main system(101) as information indicating an operation state of said main system(101),
said sub-system(102) further comprises measurement means (110,S804) for measuring an actual throughput required for said communication means(110,112,114,115) to transmit data, and
said selection means(113) selects a power mode for said sub-system(102) based on the operation rate acquired by said acquisition means(105, S803) and the actual throughput measured by said measurement means (110,S804).

7. A communication method executed by a communication apparatus having a sub-system (102)which transmits and receives data, and a main system (101) which processes data received by said sub-system (102) and generates data to be transmitted from said sub-system (102), said method comprising:
a first detection step of detecting an operation state of said main system(101);
a second detection step of detecting an operation state of said sub-system(102);
a selection step of selecting a power mode for said sub-system (102) based on a detection result obtained in the first detection step and a detection result obtained in the second detection step; and
a communication step of performing communication in the power mode selected in the selection step.

8. A program stored in a computer-readable storage medium to cause a computer to execute a communication method defined in claim 7.

9. A computer-readable storage medium storing a program defined in claim 8.
